# EUROPÄISCHE PATENTSCHRIFT

(11) **EP 1 625 046 B1**
(45) Veröffentlichungstag und Bekanntmachung des Hinweises auf die Patenterteilung: **08.12.2010**
(21) Anmeldenummer: 04731624.5
(22) Anmeldetag: 07.05.2004
(51) Int. Cl.: B60N 2/44, B60N 2/02, B60N 2/08, B60N 2/22

(54) **VORRICHTUNG FÜR EINEN VERSTELLMECHANISMUS, VERSTELLMECHANISMUS UND VERFAHREN**
DEVICE FOR AN ADJUSTING MECHANISM, SAID ADJUSTING MECHANISM AND METHOD
DISPOSITIF POUR UN MECANISME DE REGLAGE, MECANISME DE REGLAGE ET PROCEDE ASSOCIE

(30) Priorität: 12.05.2003 DE 10321426; 09.09.2003 DE 10341866
(43) Veröffentlichungstag der Anmeldung: 15.02.2006
(73) Patentinhaber: Johnson Controls GmbH, 51399 Burscheid (DE)
(72) Erfinder: BUDWEG, Mario, 42499 Hückeswagen (DE); PELLENZ, Wolfgang, 53359 Rheinbach (DE); CZINKI, Alexander, 53111 Bonn (DE); HOGE, Alexander, 42477 Radervormwald (DE); BOUDINOT, Richard, 40625 Düsseldorf (DE); SZABLEWSKI, Piotr, 42399 Wuppertal (DE)
(74) Vertreter: Wolff, Felix
(86) Internationale Anmeldenummer: PCT/EP2004/004920
(87) Internationale Veröffentlichungsnummer: WO 2004/098945

(56) Entgegenhaltungen:
- WO-A-00/76802
- US-A- 3 761 730
- US-A- 5 613 733

## Beschreibung

Die Erfindung betrifft eine Vorrichtung zum Arretieren und zum Lösen eines Verstellmechanismus nach dem Oberbegriff des Anspruchs 1. Insbesondere für Komponenten von Kraftfahrzeugen - wie beispielsweise Sitze, Schiebedächer und dergleichen mehr, die mechanisch in mehreren Positionen einstellbar sind - ist es notwendig, dass Bedienelemente bzw. Betätigungselemente, die die mechanische Einstellung der Komponenten erlauben, an leicht erreichbaren und leicht einsehbaren Stellen platziert sind. Weiterhin ist es notwendig, dass die Betätigungselemente leicht und sicher zu bedienen sind.

Beispielsweise aus der deutschen Offenlegungsschrift DE 198 51 456 A ist eine Vorrichtung und ein Verfahren zum Verstellen von bewegbaren Teilen bekannt, bei der bzw. bei dem ein Motor zur Verstellung der bewegbaren Teile vorgesehen ist. Der Motor ist dabei sowohl zur Verstellung der bewegbaren Teile als auch zur Bereitstellung von pneumatischer Energie vorgesehen.

Andere Vorrichtungen Zum Arretieren und zum Lösen eines Verstellmechanisms sind. z.B. aus der US 3 761 730 A, der WO 00/76802 A sowie der US 5613733A bekannt.

Bei dieser bekannten Vorrichtung und dem bekannten Verfahren ist es nachteilig, dass eine mechanische Verstellung der bewegbaren Teile vollständig von dem Motor übernommen wird, was die Vorrichtung teuer und aufwendig macht.

Der Erfindung liegt daher die Aufgabe zugrunde, eine Vorrichtung zum Arretieren und zum Lösen eines Verstellmechanismus zu schaffen, bei der die Verstellung des Verstellmechanismus selbst nicht automatisch, beispielsweise elektrisch oder pneumatisch, vorgesehen ist, sondern bei der die Einstellung des Verstellmechanismus von einer ersten möglichen Einstellung zu einer zweiten möglichen Einstellung manuell durchgeführt wird. Lediglich die Entriegelung bzw. das Lösen des Verstellmechanismus wird - ausgelöst durch die Betätigung eines Betätigungselements - automatisiert, beispielsweise pneumatisch oder elektrisch mittels eines Entriegelungsaktuators vorgenommen. Dadurch kann die erfindungsgemäße Vorrichtung klein, leicht und kostengünstig hergestellt werden, beispielsweise weil kein großvolumiger, schwerer und teuerer Motor zur automatisierten Verstellung notwendig ist.

Diese Aufgabe wird erfindungsgemäß durch eine Vorrichtung zum Arretieren und zum Lösen eines Verstellmechanismus gemäß Patentanspruch 1 gelöst.

Dies hat den Vorteil, dass der Entriegelungsaktuator nicht manuell betätigt werden muss. Hierdurch entfällt die Notwendigkeit, das Betätigungselement für den Entriegefungsaktuator an einer Stelle zu positionieren, an der ein Benutzer des Verstellmechanismus zum einen nicht bequem eine Entriegelung des Verstellmechanismus bewirken kann, oder es entfällt die Notwendigkeit, aufwändige mechanische Hilfsmittel vorzusehen, die zwar eine Entriegelung des Verstellmechanismus an einer bequem zugänglichen Stelle ermöglichen, dafür jedoch groß, schwer und teuer herzustellen und zu montieren sind. Weiterhin ist es erfindungsgemäß vorteilhaft möglich, ein Betätigungselement derart vorzusehen, dass der Kraftaufwand zu seiner Betätigung vergleichsweise gering ist. Hierdurch können auch körperlich schwächere Benutzer in einfacher und sicherer Weise den Verstellmechanismus bedienen. Weiterhin ist es dadurch vorteilhaft möglich, eine Bedienung des Betätigungselements vorzusehen, bei der keine großen Kräfte sowohl zur Verstellung des Verstellmechanismus als auch zur Betätigung des Entriegelungsaktuators aufzuwenden sind.

Vorzugsweise ist eine Aktivierung des Entriegelungsaktuators zu Beginn eines Einstellzeitintervalls und eine Deaktivierung des Entriegelungsaktuators am Ende des Einstellzeitintervalls vorgesehen wobei die Vorrichtung Detektionsmittel zur Detektion des Endes des Einstellzeitintervalls umfasst oder solche Detektionsmittel der Vorrichtung zugeordnet sind. Hierdurch ist eine besonders benutzerfreundliche Bedienung des Verstellmechanismus möglich. Weiterhin ist eine Vielzahl von verschiedenen Einstellsituationen bzw. eine Vielzahl von möglichen Abbruchkriterien des Einstell- bzw. Verstellvorgangs des Verstellmechanismus möglich.

Vorzugsweise ist eine Positionsänderung des Arretiermittels von seiner Löseposition in seine Arretierposition mittels eines mechanischen und/oder elektrischen und/oder pneumatischen Verriegelungsaktuators vorgesehen ist. Der Verriegelungsaktuator dient dazu, den Verstellmechanismus nach einem Verstellvorgang wieder zu arretieren und damit im laufenden Betrieb, beispielsweise eines Kraftfahrzeugs, sicher benutzen zu können.

Vorzugsweise ist eine Positionsänderung des Arretiermittels von seiner Löseposition in seine Arretierposition mittels einer Feder als mechanischem Verriegelungsaktuator vorgesehen. Dadurch ist eine besonders einfache und kostengünstige Lösung für einen Verriegelungsaktuator möglich.

Vorteilhaft ist weiterhin, dass die Positionsänderung des Arretiermittels von seiner Arretierposition in seine Löseposition gegen eine Kraftwirkung des Verriegelungsaktuators durchführbar vorgesehen ist. Damit ist gewährleistet, dass die Arretierposition des Arretiermittels immer - auch bei Funktionsausfall des Entriegelungsaktuators - möglich ist. Das führt dazu, dass der Verstellmechanismus im Notfall, beispielsweise bei einem Zusammenstoß, stabil und arretiert vorgesehen ist.

Vorzugsweise ist bei in seiner Arretierposition befindlichem Arretiermittel eine reib- und/oder kraftschlüssige Wirkung des Arretiermittels auf den Verstellmechanismus vorgesehen ist. Dadurch ist auf einfache Weise eine Arretierung des Verstellmechanismus gewährleistet.

Vorteilhaft ist weiterhin, dass der Entriegelungsaktuator als pneumatischer Entriegelungsaktuator mit einer Wirkfläche vorgesehen ist, wobei bei in seiner Arretierposition befindlichem Arretiermittel die Wirkfläche beidseitig mit dem Umgebungsdruck verbunden vorgesehen ist. Das führt dazu, dass der Verstellmechanismus in einer Notfallsituation, beispielsweise bei einem Zusammenstoß, bei der eine Versorgung mit pneumatischer Energie nicht gewährleistet ist, stabil und arretiert vorgesehen ist.

Vorteilhaft ist weiterhin, dass bei der Aktivierung des Entriegelungsaktuators ein erster Leistungsbedarf zur Lösung des Arretiermittels vorgesehen ist und dass zur Aufrechterhaltung der Lösung des Arretiermittels ein zweiter Leistungsbedarf des Entriegelungsaktuators vorgesehen ist, wobei der zweite Leistungsbedarf kleiner als der ersten Leistungsbedarf ist. Bevorzugt ist weiterhin, dass der erste Leistungsbedarf des Entriegelungsaktuators mittels einer ersten Ansteuerspannung und dass der zweite Leistungsbedarf des Entriegelungsaktuators mittels einer zweiten Ansteuerungsspannung realisiert ist. Weiterhin ist bevorzugt, dass der Entriegelungsaktuator mit dem ersten Leistungsbedarf höchstens während eines vorgegebenen Überlastzeitintervalls ansteuerbar vorgesehen ist. Hierdurch ist es möglich, den Entriegelungsaktuator kleiner zu dimensionieren als es der momentan erforderlichen Leistung zur Entriegelung, d.h. zur Lösung des Arretiermittels aus seiner Arretierposition in seine Löseposition, entspricht. Hierzu wird der Entriegelungsaktuator also zeitweise derart überlastet, dass er einer solchen Belastung zwar momentan standhalten kann, jedoch dauerhaft damit überlastet wäre. Es ist damit vorteilhaft möglich, den Entriegelungsaktuator kleiner zu dimensionieren als es dem kurzzeitig erforderlichen ersten Leistungsbedarf bzw. der kurzzeitig erforderlichen ersten Ansteuerungsspannung, insbesondere aus Gründen einer thermischen Überlastung, entspricht. Bezogen auf Lastspitzen zur Bewegung des Arretiermittels in seine Löseposition kann daher der Entriegelungsaktuator erfindungsgemäß unterdimensioniert sein und in einem vergleichsweise kurzzeitigen Überlastbetrieb oberhalb der Nennspannung des Entriegelungsaktuators betrieben werden. Dies verringert die Kosten und das Gewicht der erfindungsgemäßen Vorrichtung. Bevorzugt ist ein solcher Entriegelungsaktuator als ein elektrischer Aktuator vorgesehen, so dass zu dessen Ansteuerung bei unterschiedlichem Leistungsbedarf unterschiedliche Ansteuerungsspannungen verwendet werden.

Bevorzugt ist weiterhin vorgesehen, dass der erste und/oder zweite Leistungsbedarf zeitlich wenigstens teilweise konstant ist oder dass der erste und/oder zweite Leistungsbedarf zeitlich variabel ist. Besonders ist es erfindungsgemäß bevorzugt, dass der erste Leistungsbedarf während eines ersten Ansteuerungsintervalls und dass der zweite Leistungsbedarf während eines zweiten Ansteuerungsintervalls zur Ansteuerung des Entriegelungsaktuators vorgesehen ist. Erfindungsgemäß ist es daher vorteilhaft möglich entweder einen kontinuierlichen Übergang zwischen dem ersten und dem zweiten Leistungsbedarf vorzusehen - beispielsweise im Sinn eines exponentiellen oder quasi-exponentiellen Abfallens der Ansteuerungsspannung von einem Anfangswert auf einen dauerhaft zur Aufrechterhaltung der Löseposition des Arretiermittels erforderlichen zweiten Ansteruerungsspannungswert - oder einen oder mehrere diskontinuierliche Übergänge zwischen dem ersten und zweiten Leistungsbedarf vorzusehen. Beispielsweise können die unterschiedlichen Ansteuerungsspannungen zur Entriegelung und zur Aufrechterhaltung der Entriegelung auch während bestimmter Zeitintervalle konstant vorgesehen sein. Dies erhöht erfindungsgemäß die Variabilität und die Zahl der Einsatzmöglichkeiten der erfindungsgemäßen Vorrichtung.

Die verschiedenen Ansteuerungsspannungen können beispielsweise mittels der unterschiedlichen Spannungsniveaus des Bordnetzes in einem Fahrzeug mit einem solchen, unterschiedliche Spannungsniveaus aufweisenden Bordnetz ohne eine komplizierte Ansteuerung realisiert werden. Alternativ dazu können die verschiedenen Ansteuerungsspannungen auch durch eine geregelte Ansteuerung, beispielsweise mittels eines Pulsweitenmodulationsverfahrens erzeugt werden.

Bevorzugt ist weiterhin, dass die Wiederholungsrate einer Aktivierung des Entriegelungsaktuators begrenzt ist oder zumindest während eines vorgegebenen Mittelungsintervalls begrenzt ist. Hierdurch ist es vorteilhaft möglich, dass es nicht durch eine Unsachgemäße Benutzung der Vorrichtung zu Schäden aufgrund beispielsweise einer Überlastung des Entriegelungsaktuators, beispielsweise aufgrund Überhitzung, kommt. Die Wiederholrate der Aktivierung des Entriegelungsaktuators ist hierbei die Anzahl der Betätigungen der Vorrichtung derart, dass der Entriegelungsaktuator eine Entriegelung des Arretiermittels ausgehend von seiner Arretierposition in seine Löseposition vornimmt. Wenn beispielsweise der Entriegelungsaktuator 30 Sekunden zur Abkühlung benötigt, würde eine Wiederholungsrate oberhalb von 2 Betätigungen pro Minute von einer Steuerungseinrichtung detektiert und verhindert werden. Alternativ dazu kann es bei einer ebenfalls beispielhaft benötigten Abkühlzeit von 30 Sekunden vorgesehen sein, dass beispielsweise 5 Betätigungen während 2 Minuten ermöglicht werden, dass sich jedoch auf einem Mittelungsintervall von 4 Minuten nicht mehr als beispielsweise 6 Betätigungen ergeben. Hierdurch wird eine flexible Benutzung der Vorrichtung durch einen Benutzer ermöglicht, die einen Missbrauch ausschließt. Die genannten Werte verstehen sich ausschließlich beispielhaft.

Bevorzugt ist weiterhin, dass das Arretiermittel entweder in eine Löseposition und in eine Arretierposition bringbar ist, wobei mittels einer Deaktivierung des Entriegelungsaktuators das Arretiermittel von seiner Löseposition in seine Arretierposition bringbar ist, oder dass das Arretiermittel in eine Löseposition, in eine Arretierposition und in eine Bereitschaftsposition bringbar ist, wobei mittels einer Deaktivierung des Entriegelungsaktuators das Arretiermittel von seiner Löseposition in seine Arretier oder wenigstens in seine Bereitschaftsposition bringbar ist. Bevorzugt ist ferner, dass bei einem Spannungsverlust der Vorrichtung oder in einer Notfallsituation eine Deaktivierung des Entriegelungsaktuators vorgesehen ist, wobei eine Notfallsituation insbesondere eine Crash- und/oder Precrash-Situation und/oder eine besonders starke Bremsung des Fahrzeugs ist. Die Bereitschaftsposition ist daher **dadurch gekennzeichnet, dass** die Möglichkeit zum Zustandswechsel des Arretiermittels in den verriegelten Zustand des Verstellmechanismus, d.h. in die Arretierposition des Arretiermittels, besteht und zwar ohne dass der Entriegelungsaktuator angesteuert werden müsste oder dass ein anderweitiger Energiebedarf bestünde. Dies erhöht besonders bei Spannungsverlust oder bei anderen Notfallsituationen beträchtlich die Sicherheit der erfindungsgemäßen Vorrichtung. Der Crashfall, d.h. das Vorliegen einer Unfallsituation - insbesondere durch das Ansprechen von Beschleunigungssensoren aufgrund von oberhalb von Schwellenwerten liegenden Beschleunigungswerten des Fahrzeugs - wird erfindungsgemäß insbesondere zentral im Fahrzeug festgestellt. Eine Pre-Crash-Situation, d.h. eine Situation, in der ein Unfall unmittelbar bevorsteht, wird erfindungsgemäß ebenfalls im Fahrzeug zentral mittels weiterer Sensoren - beispielsweise Umgebungssensoren wie Ultraschallsensoren, Radarsensoren oder optische Sensoren - ermittelt.

Bevorzugt ist ferner, dass die Vorrichtung ein Signalisierungsmittel umfasst oder der Vorrichtung ein Signalisierungsmittel zugeordnet ist, wobei mittels des Signalisierungsmittels das Vorliegen des Arretiermittels in der Bereitschaftsposition signalisierbar ist. In der Bereitschaftsposition der Vorrichtung ist der Verstellmechanismus noch nicht vollständig arretiert - etwa weil in arretiertem Zustand ineinandergreifende Zähne von Zahnrädern oder Zahnstangen noch nicht ineinandergreifen - so dass an dieser Stelle ein Sicherheitsrisiko besteht, welches durch die Signalisierungsmittel - beispielsweise ein akustisches Signalisierungsmittel oder ein optische Signalisierungsmittel, etwa eine Anzeige oder ein Lautsprecher oder ein haptisches Signalisierungsmittel, etwa eine Vibrationsanzeige - einem Benutzer mitgeteilt wird.

Vorteilhaft ist weiterhin, dass der Entriegelungsaktuator als pneumatischer Entriegelungsaktuator vorgesehen ist, der mit einer Ventileinheit zusammenwirkt, die bei Überschreiten eines vorgegebenen Beschleunigungswertes in eine vorgegebene Richtung den Entriegelungsaktuator deaktiviert. Alternativ dazu ist es erfindungsgemäß auch möglich, dass der Entriegelungsaktuator als elektrischer Entriegelungsaktuator vorgesehen ist, der mit einem Sensormittel zusammenwirkt, das bei Überschreiten eines vorgegebenen Beschleunigungswertes in eine vorgegebene Richtung den Entriegelungsaktuator deaktiviert. Damit ist es möglich, eine schnelle Deaktivierung des Entriegelungsaktuators vorzunehmen. Wenn daher der Verstellmechanismus beispielsweise während der Fahrt verstellt wird und es kommt während des Verstellvorgangs zu einer Unfallsituation mit einer starken Beschleunigung/Verzögerung des Fahrzeugs, so bewirkt die Ventileinheit durch die Deaktivierung des Entriegelungsaktuators eine Arretierung des Verstellmechanismus.

Erfindungsgemäß kann in vorteilhafter Weise auch vorgesehen sein, eine solche Arretierung des Verstellmechanismus beim Auftreten von solchen Beschleunigungen/Verzögerungen des Fahrzeugs vorzunehmen, wie sie bei einer Vollbremsung des Fahrzeugs vorkommen.

Bevorzugt ist weiterhin, dass als Detektionsmittel zur Detektion des Endes des Einstellzeitintervalls das Betätigungselement vorgesehen ist. Hierdurch wird in einfacher Weise die unterbrechungslose Fortdauer des Nutzerwillens zur Aufrechterhaltung einer durch die Betätigung des Betätigungselements einmal eingeleiteten Entriegelung detektiert. Alternativ zu einem Betätigungselement als Detektionsmittel zur Detektion des Endes des Einstellzeitintervalls ist es erfindungsgemäß möglich, weitere Detektionsmittel entweder der Vorrichtung bzw. dem Verstellmechanismus zuzuordnen oder aber solche Detektionsmittel in die Vorrichtung oder den Verstellmechanismus zu integrieren. Hierzu zählen beispielsweise Detektionsmittel, die eine Kraftausübung auf verschiedene Teile des Verstellmechanismus detektieren. Weiterhin können hierzu Detektionsmittel gehören, die die Berührung von bestimmten Stellen der Vorrichtung bzw. des Verstellmechanismus detektieren.

Bevorzugt ist weiterhin, dass der Vorrichtung ein Sensormittel zugeordnet ist oder dass die Vorrichtung ein Sensormittel umfasst, wobei mittels des Sensormittels ein Sperrsignal bereitstellbar ist, aufgrund dessen eine Aktivierung des Entriegelungsaktuators unterbleibt. Ferner ist bevorzugt, dass das Sensormittel ein Sitzbelegungssensor oder ein Körperkontaktsensor, insbesondere an einer Rückenlehne oder Armlehne, ist. Hierdurch ist es möglich, in besonderen Situationen vollständig eine Betätigung des Entriegelungsaktuators zu verhindern, wenn nicht weitere als erfüllt zu fordernde Bedingungen - insbesondere festgestellt durch ein Sensormittel - erfüllt sind. Beispielsweise kann dadurch ausgeschlossen werden, dass durch beabsichtigte oder unbeabsichtigte Betätigung des Betätigungselements ohne Vorhandensein eines wirklichen Benutzerwunsches zur Verteilung des Verstellmechanismus - beispielsweise dadurch manifestiert, dass sich ein Benutzer auf dem Fahrzeugsitz befindet oder dass der Rücken eines Benutzers an der Rückenlehne anlehnt oder dass ein Benutzer seinen Arm auf die Armlehne aufgelegt hat- eine Entriegelung durchgeführt werden kann. Weiterhin kann es erfindungsgemäß vorgesehen sein, dass eine Entriegelung des Verstellmechanismus erst nach einer gewissen Totzeit durchgeführt wird, d.h. dass ein vom Betätigungselement erzeugtes Signal erst nach dem Verstreichen der Totzeit als gültig bewertet wird. Hierdurch können beispielsweise negative Auswirkungen aufgrund eines prellenden Schalters weitgehend vermieden werden. Erfindungsgemäß kann es weiterhin vorgesehen sein, dass eine Entriegelung erst nach der Detektion eines "Doppelklick"-Betätigungssignals am Betätigungselement ermöglicht wird.

Erfindungsgemäß umfasst die Vorrichtung einen ersten Teilentriegelungsaktuator und einen zweiten Teilentriegelungsaktuator, wobei die Teilentriegelungsaktuatoren mittels unterschiedlichen mechanischen Übersetzungen gemeinsam die Lösung des Arretiermittels bewirken. Vorteilhaft ist hierbei, dass nichtlineare Kraft-Weg-Profile bei der Entriegelung des Verstellmechanismus besser berücksichtigt werden können. Beispielsweise könnte in einem Anfangsstadium des Entriegelungsvorgangs eine große Kraft erforderlich sein, für dessen Aufbringung bei einer gegebenen Hebellänge, die derart gewählt ist, dass der Entriegelungsvorgang vollständig durchgeführt werden kann, ein vergleichsweise großer Aktuator erforderlich wäre. Erfindungsgemäß ist es nun vorteilhaft vorgesehen, einen kleiner dimensionierten ersten Aktuator (auch als Teilentriegelungsaktuator genannt) mit einem größeren Hebelarm derart zu verbinden, dass auch der kleinere Aktuator die im Anfangsstadium des Entriegelungsvorgangs erforderliche Kraft aufzubringen in der Lage ist. Allerdings gibt es dann dass Problem, dass aufgrund der größeren Länge des Hebelarms, auch der Verfahrweg (eines als linearer Aktuator beispielhaft dargestellten Aktuators) größer gewählt werden müsste, obwohl im weiteren Verlauf des Verfahrwegs, d.h. nach dem Anfangsstadium des Entriegelungsvorgangs, möglicherweise eine geringere Kraft des Aktuators ausreichen würde. Für diesen Fall ist der zweite Teilentriegelungsaktuator vorgesehen, der - mit einem kleineren Hebelarm verbunden - den Verfahrweg nach dem Anfangsstadium des Entriegelungsvorgangs "übernimmt". Es ist daher erfindungsgemäß möglich, aufgrund der Hebelgeometrie einen ungleichmäßigen Kraft-Weg-Verlauf bei der Entriegelung zu kompensieren und trotzdem vergleichsweise kleinere und billigere Komponenten zu verwenden..

Ein weiterer Gegenstand der vorliegenden Erfindung ist ein Verstellmechanismus, der mit einer erfindungsgemäßen Vorrichtung zusammenwirkend vorgesehen ist. Ein solcher Verstellmechanismus ist vorteilhaft durch eine Bewegung zweier Teile, die von einer an den Teilen ansetzenden Kraftwirkung ausgeht, von einer ersten Einstellung in eine zweite Einstellung verstellbar vorgesehen. Dadurch kann der Kraftaufwand und der Zeitbedarf zur Positionsänderung des Verstellmechanismus minimiert werden, da beispielsweise keine Verstellelemente - wie etwa Einstellräder zur Verstellung einer Rückenlehne - manuell mit hohem Kraftaufwand bzw. großer Übersetzung bewegt werden müssen, sondern die Kraft direkt - etwa durch eine Kraftausübung des Benutzers auf die Rückenlehne selbst - an dem zu bewegenden Teil angreift.

Bevorzugt ist, dass die an den Teilen ansetzende Kraftwirkung gegen die Wirkung eines Verstellaktuators, insbesondere eines mechanischen Verstellaktuators, erfolgt. Ferner ist bevorzugt, dass der Verstellaktuator durch eine Bewegung der Teile von ihrer ersten Position in ihre zweite Position gespannt wird, wobei der Verstellaktuator insbesondere als Feder vorgesehen ist. Weiterhin ist bevorzugt, dass die Bewegung des Verstellmechanismus aufgrund des Verstellaktuators geschwindigkeitsbegrenzt ist, wobei insbesondere der Verstellmechanismus ein Dämpfungselement aufweist. Darüber hinaus ist bevorzugt, dass der Verstellaktuator und das Dämpfungselement miteinander integriert vorgesehen sind, insbesondere als Gasdruckdämpfer. Dadurch ist es erfindungsgemäß möglich, einen Verstellmechanismus zu schaffen, der besonders nutzerfreundlich ist. Beispielsweise kann die Rückenlehne eines Fahrzeugsitzes derart mittels einer Feder oder eines Gasdruckdämpfers bei einer Neigung nach hinten vorbelastet sein, dass sie sich automatisch aufrichtet, wenn dies ein Benutzer wünscht. Desgleichen kann auch die Längsverstellung des Sitzes eine Feder oder dergleichen aufweisen, so dass beispielsweise der Sitz "automatisch" nach vorne geschoben wird und ein Benutzer lediglich noch mit einem kleinen Kraftaufwand gegen diese Feder den Sitz nach hinten drücken muss um eine Komfortposition einzustellen. Ein umständliches "Geruckel", um einen Sitz nach vorne zu bewegen ist damit nicht mehr erforderlich. Aus Sicherheitsgründen ist es erfindungsgemäß vorgesehen, dass sich solcherlei "automatisch" sich bewegende Sitze oder Sitzteile oder Teile von anderen Komponenten eines Fahrzeugs nicht mit einer zu großen Geschwindigkeit bewegen, was ansonsten Gefahren beispielsweise für Kinder oder dergleichen hervorrufen könnte. Entsprechend kann es beispielsweise vorgesehen sein, dass durch die Betätigung eines Betätigungselements am Kofferraum eines Fahrzeugs eine feder-vorbelastete Rückbank oder Rücksitz-Lehne entriegelt wird, so dass eine "Remote-Funktionalität", d.h. eine Steuerbarkeit einer "automatischen" Sitzbewegung bzw. allgemeiner einer "automatischen" Komponenten-Bewegung in einem Fahrzeug ausgehend von Orten am Fahrzeug möglich ist, die sich nicht in der Nähe des Sitzes bzw. der Komponente befinden. Hierdurch wird die Benutzerfreundlichkeit einer solchen Komponente bzw, eines solchen Sitzes weiter erhöht, beispielsweise - für das angedeutete Beispiel die Beladung eines Kofferraums oder allgemein Laderaums mit einem sperrigen und ggf. schweren Gegenstand.

Die Erfindung wird nachfolgend anhand von in der Zeichnung dargestellten Ausführungsbeispielen näher erläutert.
- **Figur 1**: zeigt eine schematische Darstellung einer Komponente mit einem ersten und einem zweiten Verstellmechanismus und einer vergrößert dargestellten Bedieneinheit.
- **Figur 2**: zeigt einen herkömmlichen Verstellmechanismus mit einer manuellen Entriegelungsmöglichkeit.
- **Figur 3**: zeigt einen ersten Verstellmechanismus mit einer Vorrichtung in Seitenansicht.
- **Figur 4**: zeigt einen zweiten Verstellmechanismus mit einer Vorrichtung in Seitenansicht und Draufsicht.
- **Figur 5**: zeigt ein Zeitdiagramm zur Ansteuerung eines Entriegelungsaktuators.
- **Figur 6**: zeigt schematisch eine Steuerungseinheit.

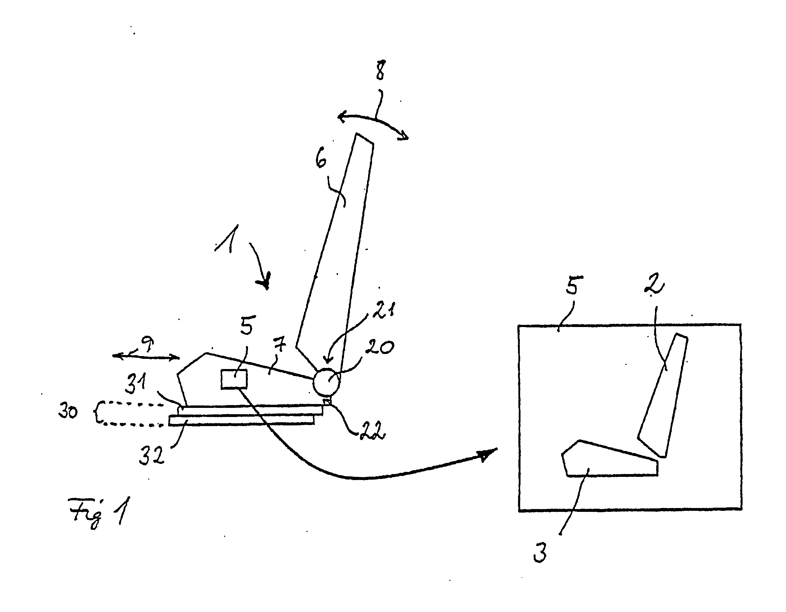

In **Figur 1** ist im linken Teil der Figur eine Komponente 1 mit einem ersten Verstellmechanismus 30 und einem zweiten Verstellmechanismus 20 und einer, im rechten Teil, vergrößert dargestellten Bedieneinheit 5 dargestellt. Die Komponente 1 ist insbesondere als Sitz 1 eines Kraftfahrzeugs vorgesehen, kann jedoch auch eine beliebige andere Komponente eines Kraftfahrzeugs sein. Der erste Verstellmechanismus 30 umfasst ein erstes Teil 31 und ein zweites Teil 32, die translatorisch zueinander bewegbar vorgesehen sind. Der zweite Verstellmechanismus 20 umfasst ein lediglich mittels eines Pfeils und dem Bezugszeichen 21 angedeutetes erstes Teil 21 und ein lediglich mittels eines Pfeils und dem Bezugszeichen 22 angedeutetes zweites Teil 22, wobei die Teile 21, 22 des zweiten Verstellmechanismus 20 rotatorisch zueinander bewegbar vorgesehen sind. Mittels jeweils eines in **Figur 1** nicht dargestellten Arretiermittels für die beiden Verstellmechanismen 20, 30 sind die Teile 31, 32 des ersten Verstellmechanismus 30 miteinander arretierbar vorgesehen und sind die Teile 21, 22 des zweiten Verstellmechanismus 20 miteinander arretierbar vorgesehen. Die Arretierung der Teile 21, 22, 31, 32 zueinander ist dabei entweder kontinuierlich oder diskontinuierlich vorgesehen. Die Teile 21, 22 des zweiten Verstellmechanismus 20 sind dabei respektive an einer mit dem Bezugszeichen 6 bezeichneten "Lehne" der als Sitz 1 beispielhaft dargestellten Komponente 1 oder an einer mit dem Bezugszeichen 7 bezeichneten "Sitzfläche" der Komponente 1 befestigt. Dadurch ist es möglich, durch die Ausübung einer Kraft an der Lehne 6 des Sitzes 1 entlang der mittels eines Doppelpfeils und dem Bezugszeichen 8 bezeichneten Richtung die Teile 21, 22 des zweiten Verstellmechanismus 20 von einer ersten Position der Teile 21, 22 zueinander in eine zweite Position der Teile 21, 22 zueinander zu bewegen. Die erste Position der Teile 21, 22 zueinander wird auch als erste Einstellung des zweiten Verstellmechanismus 20 bezeichnet und die zweite Position der Teile 21, 22 zueinander wird auch als zweite Einstellung des zweiten Verstellmechanismus 20 bezeichnet. Entsprechend sind die Teile 31, 32 des ersten Verstellmechanismus 30 respektive an der Sitzfläche 7 oder an einer nicht dargestellten Karosserie eines ebenfalls nicht dargestellten Kraftfahrzeugs befestigt. Dadurch ist es möglich, durch die Ausübung einer Kraft an der Sitzfläche 7 des Sitzes 1 entlang der mittels eines Doppelpfeils und dem Bezugszeichen 9 bezeichneten Richtung die Teile 31, 32 des zweiten Verstellmechanismus 30 von einer ersten Position der Teile 31, 32 zueinander in eine zweite Position der Teile 31, 32 zueinander zu bewegen. Die erste Position der Teile 31, 32 zueinander wird auch als erste Einstellung des ersten Verstellmechanismus 30 bezeichnet und die zweite Position der Teile 31, 32 zueinander wird auch als zweite Einstellung des ersten Verstellmechanismus 30 bezeichnet. An der Komponente 1 ist die Bedieneinheit 5 vorgesehen, die im rechten Teil der **Figur 1** vergrößert dargestellt ist. In der vergrößerten Darstellung der Bedieneinheit 5 ist ein erstes Betätigungselement 3 und ein zweites Betätigungselement 2 dargestellt. Das erste Betätigungselement 3 dient der Betätigung eines in **Figur 1** nicht dargestellten Entriegelungsaktuators eines Arretierungsmittels des ersten Verstellmechanismus 30 und das zweite Betätigungselement 2 dient der Betätigung eines in **Figur 1** ebenfalls nicht dargestellten Entriegelungsaktuators des Arretierungsmittels des zweiten Verstellmechanismus 20. Wenn ein Benutzer der Komponente 1 eine Verstellung des ersten oder des zweiten Verstellmechanismus 30, 20 wünscht, wird durch die Betätigung des entsprechenden Betätigungselements 2, 3 und eine Bewegung des entsprechenden Arretierungsmittels in eine Löseposition eine Entriegelung des entsprechenden Verstellmechanismus 20, 30 bewirkt, so dass durch die oben beschriebene Kraftausübung direkt oder indirekt auf eines der Teile 21, 22, 31, 32 eine Verstellung bzw. eine andere Einstellung des entsprechenden Verstellmechanismus 20, 30 möglich ist. Nach der Beendigung der Verstellung wird das entsprechende und in **Figur 1** nicht dargestellte Arretierungsmittel wieder zur Arretierung des entsprechenden Verstellmechanismus 20, 30 in seine Arretierposition eingestellt. Hierbei ist es erfindungsgemäß insbesondere vorgesehen, dass das entsprechende Betätigungselement 2, 3 während des ganzen Verstellvorgangs betätigt sein muss und dass unmittelbar nach einer Betätigung des Betätigungselements 2, 3 das entsprechende Arretierungsmittel eine Arretierung des Verstellmechanismus 20, 30 bewirkt.

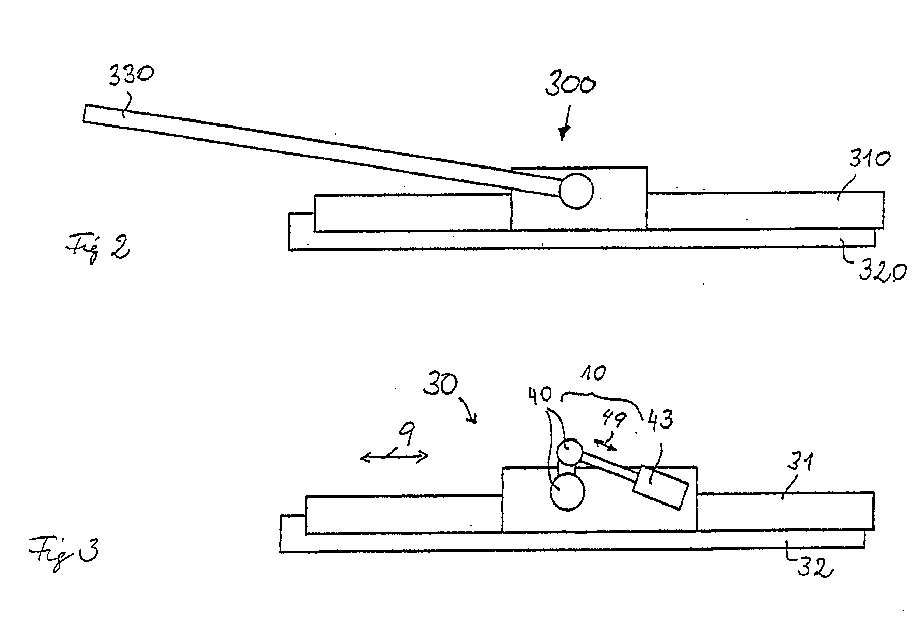

In **Figur 2** ist ein herkömmlicher Verstellmechanismus 300 mit einer manuellen Entriegelungsmöglichkeit dargestellt. Der herkömmliche Verstellmechanismus 300 weist ebenfalls Teile 310, 320 auf die beweglich zueinander vorgesehen sind. Mittels einer Entriegelungsvorrichtung 330 ist es möglich, den beispielsweise diskontinuierlich vorgesehenen Verstellmechanismus 300 derart zu entriegeln, dass die Teile 310, 320 gelöst und zueinander bewegbar sind.

In **Figur 3** ist ein erster Verstellmechanismus 30 mit einer erfindungsgemäßen Vorrichtung 10 in Seitenansicht dargestellt. Die Vorrichtung 10 weist ein Arretierungsmittel 40 auf, das mit einem ersten Entriegelungsaktuator 43 verbunden ist. Das Arretierungsmittel 40 kann in einer Arretierposition und in einer Löseposition eingestellt werden. In seiner Arretierposition fixiert das Arretierungsmittel 40 die Teile 31, 32 des ersten Verstellmechanismus 30 miteinander. In seiner Löseposition ermöglicht es das Arretierungsmittel 40, dass die Teile 31, 32 des ersten Verstellmechanismus 30 gegeneinander translatorisch bewegt werden. Der erste Entriegelungsaktuator 43 ist als Teil der Vorrichtung 10 mit dem Arretierungsmittel 40 verbunden und in der Lage, das Arretierungsmittel 40 entlang des Doppelpfeils 49 von seiner Arretierposition in seine Löseposition zu überführen. Erfindungsgemäß ist der erste Verstellmechanismus 30 insbesondere als ein Längsversteller vorgesehen, der weiterhin insbesondere ein nicht selbsthemmendes Spindel-Muttersystem umfasst.

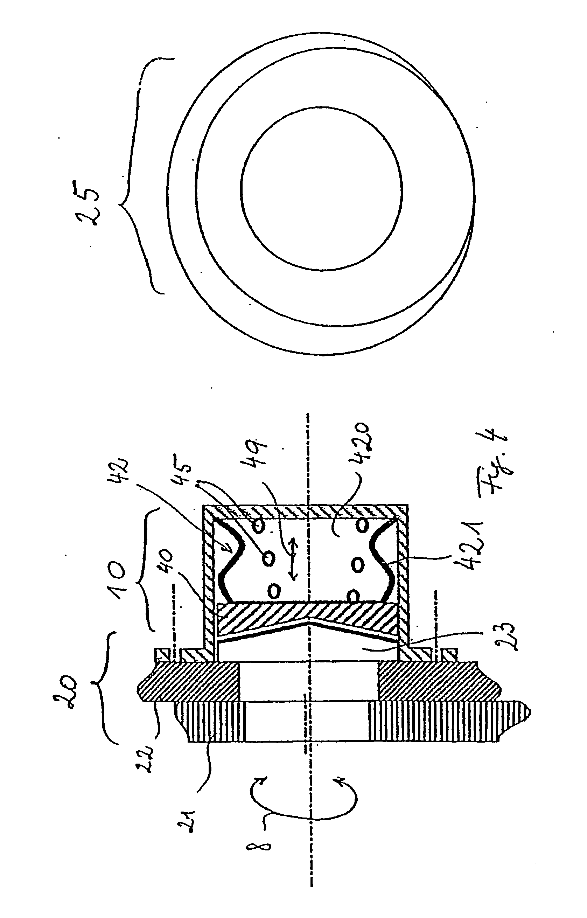

In **Figur 4** ist ein zweiter Verstellmechanismus 20 mit einer erfindungsgemäßen Vorrichtung 10 im linken Teil der **Figur 4** in Seitenansicht und im rechten Teil der **Figur 4** in Draufsicht dargestellt. Der zweite Verstellmechanismus 20 weist die ersten und zweiten Teile 21, 22 auf, die durch den zweiten

Verstellmechanismus 20 rotativ zueinander beweglich vorgesehen sind. Die Roationsbewegung der Teile 21, 22 ist mittels eines Doppelpfeils und dem Bezugszeichen 8 in **Figur 4** angedeutet. Für die rotative Beweglichkeit der beiden Teile 21, 22 sorgt erfindungsgemäß beispielsweise ein Taumelbeschlag 25 wie er im rechten Teil der **Figur 4** angedeutet ist. Im Falle einer Bewegung der Teile 21, 22 relativ zueinander bewegt bzw. dreht sich auch ein mit dem Bezugszeichen 23 bezeichnetes Element, das mit der erfindungsgemäßen Vorrichtung 10 und insbesondere mit dem Arretiermittel 40 zusammenwirkt, um eine Arretierung des zweiten Verstellmechanismus 20 zu bewirken. Das Arretiermittel 40, das beispielsweise als Reibwiderstandselement gegenüber dem Element 23 vorgesehen ist, wird im in **Figur 4** dargestellten Beispiel im Normalfall, d.h. bei arretiertem zweiten Verstellmechanismus 20, mittels des als Feder 45 vorgesehenen Verriegelungsaktuators 45 gegen das Element 23 gedrückt. Durch die Reibung zwischen dem Arretiermittel 40 und dem Element 23 unter der Federkraft wird eine Bewegung der Teile 21, 22 gegeneinander verhindert. Im Falle einer gewünschten Verstellung des zweiten Verstellmechanismus 20 und bei entsprechender Betätigung des zweiten Betätigungselements 2 wird in einer von einer Membran 421 als Wirkfläche 421 des zweiten Entriegelungsaktuators 42 umgebenen Kammer 420 ein Unterdruck derart erzeugt, dass das Arretiermittel 40 von dem Element 23 in der Richtung des mit dem Bezugszeichen 49 bezeichneten Doppelpfeils wegbewegt wird. Dadurch wird die Reibwirkung unterbunden und die Teile 21, 22 sind durch eine Krafteinwirkung auf die Teile 21, 22 zueinander bewegbar. Erfindungsgemäß ist der zweite Verstellmechanismus 20 daher insbesondere nicht selbsthemmend vorgesehen, d.h. eine Einstellung der Teile 21, 22 in unterschiedliche Positionen ist durch eine an den Teilen 21, 22 angreifende Kraft möglich. Nach der Betätigung des zweiten Betätigungselements 2 wird der Unterdruck in der Kammer 420 wieder zumindest weitgehend beseitigt, so dass die angesprochene Reibwirkung zu einer Arretierung der Teile 21, 22 führt. Dadurch wird eine reibschlüssige Wirkung des Arretiermittels 40 auf den zweiten Verstellmechanismus erreicht. Besonders vorteilhaft wirkt an der Wirkfläche 421 des zweiten Entriegelungsaktuators 42 bei deaktiviertem zweiten Entriegelungsaktuator 42 der Umgebungsdruck. In **Figur 4** ist die erfindungsgemäße Vorrichtung 10 mit ihrem pneumatischen zweiten Entriegelungsaktuator 42 als mit dem zweiten Verstellmechanismus 20 integriert vorgesehene Einheit dargestellt. Die Versorgung des pneumatischen zweiten Entriegelungsaktuators 42 mit pneumatischer Energie ist in **Figur 4** nicht dargestellt.

Es ist sowohl bei dem ersten als auch bei dem zweiten Entriegelungsaktuator 43, 42 vorgesehen, die Versorgung mit pneumatischer Energie entweder über eine zentrale Druckluftversorgungseinheit, beispielsweise aus dem Ansaugtrakt eines Verbrennungsmotors eines Kraftfahrzeugs, oder über eine dezentrale Druckluftversorgungseinheit für eine oder mehrere Komponenten 1 vorzusehen. Weiterhin ist es ebenfalls vorgesehen, anstelle von pneumatischen Ver- oder Entriegelungsaktuatoren 42, 43, 45 elektrische Aktuatoren zu verwenden. Dies hat den Vorteil, dass auf die zur Versorgung der Aktuatoren notwendige "Infrastruktur" an Druckleitungen und das damit einhergehende Gewicht sowie die entstehenden Kosten weitgehend verzichtet werden kann. Erfindungsgemäß ist weiterhin in dem oder an dem Aktuator 42, 43, 45 eine nicht dargestellte Ventileinheit vorgesehen, die bewirkt, dass die Teile 21, 22, 31, 32 beim Auftreten von zu großen Beschleunigungen auf jeden Fall zueinander arretiert vorgesehen sind. Dies kann beispielsweise dadurch geschehen, dass das Ventil bzw. die Ventileinheit durch ein elektrisches Signal angesteuert wird. In einer alternativen Ausführungsform der Erfindung kann es auch vorgesehen sein, dass das Ventil bzw. die Ventileinheit pyrotechnisch angesteuert wird. Die pyrotechnische Auslösung kann dabei ausschließlich für einen der Aktuatoren 42, 43, 45 an einer Komponente 1 durchgeführt werden oder aber es kann eine pyrotechnische Auslösung für mehrere Aktuatoren für verschiedene Verstellmechanismen 20, 30 ggf. an mehreren unterschiedlichen Komponenten 1 vorgesehen sein. In einer besonders vorteilhaften Ausführungsform der Erfindung ist es vorgesehen, dass ein nicht dargestellter und massebehafteter Ventilkolben derart in dem Ventil bzw. der Ventileinheit angeordnet ist, dass er bei hohen Beschleunigungen das Ventil gezielt derart betätigt, dass eine Arretierung der Teile 21, 22, 31, 32 bewirkt wird. Unter hohen Beschleunigungen ist in diesem Fall solche Beschleunigungen zu verstehen, die bei einem Unfall eines Kraftfahrzeugs in der Regel auftreten. Besonders bevorzugt ist eine Ausgestaltung, bei der der massenbehaftete Ventilkolben im Wesentlichen in einer der Fahrzeughauptachsen ausgerichtet ist. Weiterhin ist eine Ausgestaltung bevorzugt, bei der der massebehaftete Ventilkolben an einer rotationssymmetrischen Dichtfläche anliegt. Weiterhin ist eine Ausgestaltung bevorzugt, bei der der Ventilkolben der Dichtfläche in beliebiger Richtung folgen kann und hierdurch auf Beschleunigungen unterschiedlicher Richtung in der gewünschten Weise reagieren kann. Weiterhin ist eine Ausgestaltung bevorzugt, bei der die Ventileinheit in dem nicht dargestellten Betätigungsventil eines pneumatischen Aktuators 42, 43, 45 integriert ist. Weiterhin ist eine Ausgestaltung bevorzugt, bei der die Ventileinheit eine eigenständige Einheit darstellt. Weiterhin ist auch eine Ausgestaltung bevorzugt, bei der der Ventilkolben federbelastet in seiner Ausgangsposition, d.h. in der Position, die er ohne eine massive Beschleunigung einnimmt, gehalten wird.

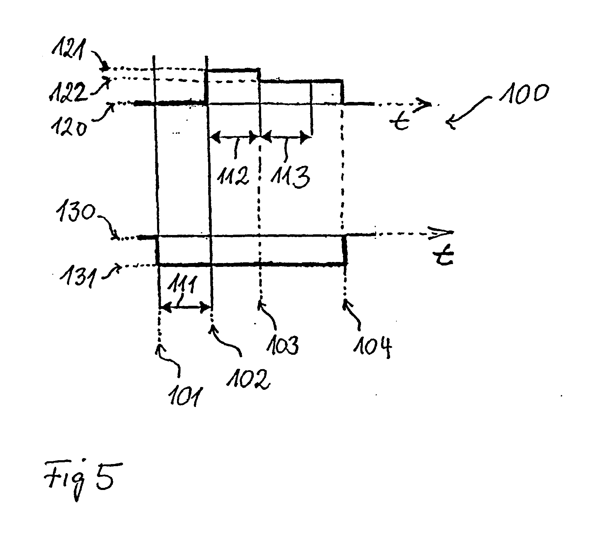

In Figur 5 ist ein Zeitdiagramm 100 zur Ansteuerung eines erfindungsgemäßen Entriegelungsaktuators 42, 43 dargestellt. Auf einer Zeitachse, die mit dem Bezugszeichen "t" bezeichnet ist, ist ein erster Zeitpunkt 101, ein zweiter Zeitpunkt 102, ein dritter Zeitpunkt 103 und ein vierter Zeitpunkt 104 mittels jeweils senkrechter Lininen dargestellt. Es ist dabei ein Spannungsverlauf am (vorzugsweise elektrisch vorgesehenen) Entriegelungsaktuator 42, 43 im oberen Bereich der Figur 5 dargestellt und es ist ein Aktivierungs- bzw. Betätigungsverlauf beispielsweise an einem Betätigungselement 2, 3 bzw. an einem nicht dargestellten Detektionsmittel im unteren Bereich der Figur 5 dargestellt. Ein Einstellzeitintervall erstreckt sich dabei im Beispiel der Figur 5 zwischen dem ersten Zeitpunkt 101 und dem vierten Zeitpunkt 104. Das Einstellzeitintervall, d.h. das Zeitintervall währenddem (ununterbrochen) ein Benutzerwille zur Änderung der Einstellung des Verstellmechanismus 20, 30 vorliegt, beginnt mit einer am Betätigungselement 2, 3 detektierbaren "Flanke" des Signals zwischen einem mit dem Bezugszeichen 130 bezeichneten Zustand "Verstellung nicht gewünscht" zu einem mit dem Bezugszeichen 131 bezeichneten Zustand "Verstellung gewünscht". Hieran kann sich zwischen dem ersten und zweiten Zeitpunkt 101, 102 ein Totzeitintervall 111 anschließen, nach dem im Spannungsverlauf des Entriegelungsaktuators 42, 43 ein Übergang von einem mit dem Bezugszeichen 120 bezeichneten Deaktivierungsniveau zu einer ersten Ansteuerungsspannung 121 stattfindet. Nach einem ersten Ansteuerungsintervall 112, währenddem das Arretiermittel 40 vom Entriegelungsaktuator 42, 43 von seiner Arretierposition in seine Löseposition verbracht wurde, verringert sich die Ansteuerungsspannung auf das Niveau einer zweiten Ansteuerungsspannung 122, erfindungsgemäß insbesondere während eines zweiten Ansteuerungsintervalls 113. Das Einstellzeitintervall kann jedoch erfindungsgemäß darüber hinaus andauern, wobei während des gesamten Einstellzeitintervalls die Ansteuerungsspannung wenigstens auf dem Niveau der zweiten Ansteuerungsspannung 122 gehalten wird, wobei der Fachmann versteht, dass hierunter auch beispielsweise eine Pulsweitenmodulationsansteuerung mit beispielsweise gleichem Spannungsniveau, jedoch unterschiedlichen Pulsweiten zu verstehen ist.

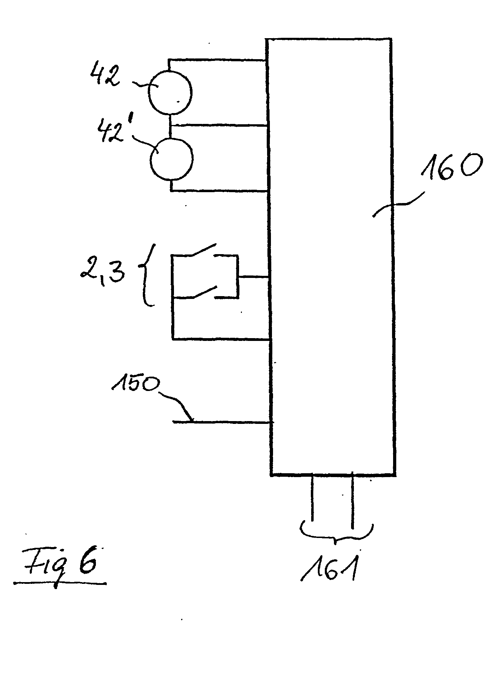

In Figur 6 ist schematisch eine Steuerungseinheit 160 zur Steuerung des erfindungsgemäßen Verstellmechanismus bzw, der erfindungsgemäßen Vorrichtung 10 dargestellt. An die Steuerungseinheit 160 ist beispielhaft der zweite Entriegelungsaktuator 42 angeschlossen sowie ein weiterer zweiter Entriegelungsaktuator 42', der gegenüber dem zweiten Entriegelungsaktuator 42 beispielsweise spiegelsymmetrisch bezüglich einer den Sitz in Fahrtrichtung des Fahrzeugs teilenden nicht dargestellten Ebene angeordnet ist. Beide zweite Entriegelungsaktuatoren 42, 42' werden in gleicher Weise von der Steuereinheit 160 in Abhängigkeit der Signale angesteuert, die die Steuereinheit 160 von den ebenfalls mit der Steuereinheit 160 verbundenen Betätigungselementen 2, 3 oder auch von nicht dargestellten weiteren Sensoren erhält. Beispielhaft ist dargestellt, dass ein Sensormittel 150 mit der Steuerungseinheit 160 verbunden ist. Falls der Steuerungseinheit 160 vom Sensormittel 150 ein entsprechendes Signal geliefert wird, erfolgt beispielsweise im oberen Bereich von **Figur 5** trotz des Beginns des Einstellzeitintervall kein Übergang vom Deaktivierungsniveau 120 zur ersten Ansteuerungsspannung 121, weil beispielsweise vom Sensormittel 150 eine unsachgemäße Bedienung der Vorrichtung 10 detektiert wird. Weiterhin ist in Figur 5 eine Spannungsversorgung 161 der Steuereinheit 160 dargestellt.

Die Entriegelungsaktuatoren 42, 43 können erfindungsgemäß auch derart vorgesehen sein, dass zu Beginn des Einstellzeitintervalls elektrische oder mechanische Energie vor dem eigentlichen Entriegelungsvorgang in den Entriegelungsaktuatoren 42, 43 gespeichert wird und während der eigentlichen Bewegung des Arretiermittels 40 freigesetzt wird. Die zur Bewegung des Arretiermittels 40 aufzubringende und die Nennleistungsaufnahme der Entriegelungsaktuatoren 42, 43 übersteigende Leistung kann in besonders vorteilhafter Weise auch aus der zuvor gespeicherten elektrischen (beispielsweise mittels eines Kondensators) oder mechanischen (beispielsweise mittels einer Feder) Energie bereitgestellt werden. Hierunter fällt beispielsweise eine Ausführungsform der vorliegenden Erfindung, bei der der Entriegelungsaktuator 42, 43 einen Vorlaufweg hat, auf welchem er "Schwung holen", damit also kinetische Energie aufbauen kann - beispielsweise in Form rotationeller oder translatorischer kinetischer Energie - und hierdurch die geforderte höhrer Anfangsleistung zur Überwindung der erhöhten Krafterfordernisse im Anfangsstadium des Entriegelungsvorgangs.

Das Arretiermittel 40 kann beispielsweise als ein federbelasteter Stößel vorgesehen sein, der selbständig zur Arretierung des Verstellmechanismus zurückgeworfen wird, sobald die Ansteuerung des Verriegelungsaktuators 42, 43 zur Aufrechterhaltung der Entriegelung entfällt, wodurch die Feder wirksam wird.

Eine symmetrische (seitliche) Anordnung von beispielsweise zweiten Entriegelungsaktuatoren 42, 42' ist erfindungsgemäß vorteilhaft, weil damit eine beispielsweise notwendige Koppelung über eine Synchronstange wegfällt. Dies hat den Vorteil, dass eine nichtvorhandene Synchronstange auch bezüglich ihres Crashverhaltens keine nachteiligen Auswirkungen aufweist, und weiterhin, dass geringere Verfahrwege von Ver- und/oder Entriegelungsaktuatoren erforderlich sind, weil - aufgrund einer geringeren Anzahl mechanisch hintereinander angeordneter und miteinander gekoppelter Teile - ein geringeres Spiel vorhanden ist.

Durch eine selbsthemmende Ausführung des Verstellmechanismus ist es erfindungsgemäß möglich, dass die zur Aufrechterhaltung der Entriegelung des Verstellmechanismus und damit die zur Lösung des Arretiermittels notfalls dauerhaft fast über das gesamte Einstellzeitintervall notwendige Leistung dadurch geringer ist, dass vom Entriegelungsaktuator 42, 43 zu übernehmenden Kräfte (aufgrund der selbsthemmenden Ausführung) geringer sind. Hierbei ist es beispielsweise möglich, dass der Entriegelungsaktuator nicht direkt gegen die (Feder-)Kraft des Arretiermittels 40 die Entriegelung aufrecht erhält, sondern, dass der Entriegelungsaktuator das in seiner Löseposition befindliche Arretiermittel 40 - beispielsweise mittels eines "ratschenartigen" Einrastmechanismus - lediglich dort hält und das Arretiermittel 40 beispielsweise bei Stromausfall derart freigibt, dass das Arretiermittel 40 wenigstens in die Bereitschaftsposition fällt. Die Dauerleistungsansteuerung (d.h. beispielsweise mittels der zweiten Ansteuerungsspannung 122 dient damit primär dazu, dass das Arretiermittel 40 nicht in die Bereitschaftsposition zurückfällt).

Erfindungsgemäß ist es weiterhin vorteilhaft möglich, dass bei einer Vollintegration des Entriegelungsaktuators 42, 43 mit Teilen des Verstellmechanismus ein einfacher und kompakter Aufbau, insbesondere ohne die Notwendigkeit einer Anflanschung von Entriegelungsaktuatoren 42, 43 möglich ist. Hierdurch wird die Montage der Fahrzeugkomponente bzw. der Zusammenbau schneller, einfacher und kostengünstiger gestaltet.

Erfindungsgemäß ist es weiterhin möglich, dass - beispielsweise in der Steuerungseinheit 160 - die Information darüber vorliegt, welches die bevorzugte Einstellung des Verstellmechanismus 20, 30 für einen bestimmten Benutzer ist. Falls die Komponente - also insbesondere der Fahrzeugsitz - sich zum einen im Einstellzeitintervall befindet und zum anderen über die bestimmte Position bzw. Einstellung des Verstellmechanismus 20, 30 "hindurchbewegt" kann es in einer bevorzugten Ausführungsform vorgesehen sein, dass der Entriegelungsaktuator 42, 43 derart angesteuert wird, dass in dieser Einstellung bzw. Position eine Aufhebung der Entriegelung bewirkt und somit das Arretiermittel 40 arretiert wird. Wenn eine solche "anzustrebende" bzw. gewünschte Position nicht "durchfahren" wird, erfolgt keine Aufhebung der Entriegelung.

Weiterhin ist es erfindungsgemäß möglich, dass mehr als eine Verriegelungsmöglichkeit bei der Fahrzeugkomponente bzw. bei dem Fahrzeugsitz gegeben ist. Hierbei kann dann - beispielsweise in der Steuerungseinheit 160 - eine Abfolge von durchzuführenden Bewegungen des Sitzes oder zumindest von Teilen davon "abgelegt" sein, wobei beim Erreichen eine bestimmten Position oder Einstellung beispielsweise der Rückenlehne des Sitzes eine Entriegelung von weiteren Verriegelungsmöglichkeiten erfolgt, beispielsweise zum seitlichen Wegklappen eines solchen Sitzes mit umgeklappter Rückenlehne.

Für beide zuletzt genannten Anwendungssituationen der erfindungsgemäßen Vorrichtung bzw. des erfindungsgemäßen Verstellmechanismus ist es erforderlich, dass in oder an der Komponente Detektionsmittel derart ausgelegt sind, dass verschiedene Positionen des Verstellmechanismus sicher und fehlerfrei erkannt werden können.

### Bezugszeichenliste

- 1: Komponente
- 2: zweites Betätigungselement
- 3: erstes Betätigungselement
- 5: Bedieneinheit
- 6: Lehne
- 7: Sitzfläche
- 8: Richtung
- 9: Richtung
- 10: Vorrichtung
- 20: zweiter Verstellmechanismus
- 21: erstes Teil
- 22: zweites Teil
- 23: Element
- 25: Taumelbeschlag
- 30: erster Verstellmechanismus
- 31: erstes Teil
- 32: zweites Teil
- 40: Arretierungsmittel
- 42, 42': zweiter Entriegelungsaktuator
- 43: erster Entriegelungsaktuator
- 45: Verriegelungsaktuator
- 49: Doppelpfeil
- 100: Zeitdiagramm
- 101: erster Zeitpunkt
- 102: zweiter Zeitpunkt
- 103: dritter Zeitpunkt
- 104: vierter Zeitpunkt
- 111: Totzeitintervall
- 112: erstes Ansteuerungsintervall
- 113: zweites Ansteuerungsintervall
- 120: Deaktivierungsniveau
- 121: erste Ansteuerungsspannung
- 122: zweite Ansteuerungsspannung
- 130: Zustand "Verstellung nicht gewünscht"
- 131: Zustand "Verstellung gewünscht"
- 150: Sensormittel
- 160: Steuerungseinheit
- 161: Spannungsversorgung der Steuerungseinheit
- 300: herkömmlicher Verstellmechanismus
- 310, 320: Teile des herkömmlichen Verstellmechanismus
- 330: Entriegelungsvorrichtung
- 420: Kammer
- 421: Wirkfläche
- t: Zeitachse

## Patentansprüche

1. Vorrichtung (10) zum Arretieren und zum Lösen eines Verstellmechanismus (20, 30), wobei der Verstellmechanismus (20, 30) wenigstens zwei relativ zu einander bewegliche Teile (21, 22, 31, 32) aufweist, wobei die Teile (21, 22, 31, 32) bei einer ersten Einstellung des Verstellmechanismus (20, 30) in einer ersten Position zueinander vorgesehen sind und wobei die Teile (21, 22, 31, 32) bei einer zweiten Einstellung des Verstellmechanismus (20, 30) in einer zweiten Position zueinander vorgesehen sind, wobei die Vorrichtung (10) ein Arretiermittel (40) aufweist, wobei das Arretiermittel (40) relativ zu dem Verstellmechanismus (20, 30) wenigstens in eine Arretierposition und in eine Löseposition bringbar ist, wobei eine Verstellung des Verstellmechanismus (20, 30) von seiner ersten Einstellung in seine zweite Einstellung nur bei in seiner Löseposition befindlichem Arretiermittel (40) vorgesehen ist, wobei eine Positionsänderung des Arretiermittels (40) von seiner Arretierposition in seine Löseposition mittels eines elektrischen und/oder pneumatischen Entriegelungsaktuators (42, 43) vorgesehen ist, **dadurch gekennzeichnet, dass** der Entriegelungsaktuator (42, 43) einen ersten Teilentriegelungsaktuator und einen zweiten Teilentriegelungsaktuator umfasst, wobei die Teilentriegelungsaktuatoren mittels unterschiedlichen mechanischen Übersetzungen gemeinsam die Lösung des Arretiermittels (40) bewirken.

2. Vorrichtung (10) nach Anspruch 1, **dadurch gekennzeichnet, dass** eine Aktivierung des Entriegelungsaktuators (42, 43) zu Beginn eines Einstellzeitintervalls und eine Deaktivierung des Entriegelungsaktuators (42, 43) am Ende des Einstellzeitintervalls vorgesehen ist, wobei die Vorrichtung (10) Detektionsmittel zur Detektion des Endes des Einstellzeitintervalls umfasst oder solche Detektionsmittel der Vorrichtung (10) zugeordnet sind.

3. Vorrichtung (10) nach einem der vorhergehenden Ansprüche, **dadurch gekennzeichnet, dass** eine Positionsänderung des Arretiermittels (40) von seiner Löseposition in seine Arretierposition mittels eines mechanischen und/oder elektrischen und/oder pneumatischen Verriegelungsaktuators (45) vorgesehen ist.

4. Vorrichtung (10) nach einem der vorhergehenden Ansprüche, **dadurch gekennzeichnet, dass** eine Positionsänderung des Arretiermittels (40) von seiner Löseposition in seine Arretierposition mittels einer Feder als mechanischem Verriegelungsaktuator (45) vorgesehen ist.

5. Vorrichtung (10) nach einem der vorhergehenden Ansprüche, **dadurch gekennzeichnet, dass** die Positionsänderung des Arretiermittels (40) von seiner Arretierposition in seine Löseposition gegen eine Kraftwirkung des Verriegelungsaktuators (45) durchführbar vorgesehen ist.

6. Vorrichtung (10) nach einem der vorhergehenden Ansprüche, **dadurch gekennzeichnet, dass** bei in seiner Arretierposition befindlichem Arretiermittel (40) eine reib- und/oder kraftschlüssige Wirkung des Arretiermittels (40) auf den Verstellmechanismus (20, 30) vorgesehen ist.

7. Vorrichtung (10) nach einem der vorhergehenden Ansprüche, **dadurch gekennzeichnet, dass** die Versorgung mit pneumatischer Energie des Entriegelungsaktuators (42, 43) und/oder des Verriegelungsaktuators (45) entweder aus dem Ansaugtrakt einer Verbrennungskraftmaschine oder aus einer zentralen Druckversorgungseinheit oder aus einer dezentralen Druckversorgungseinheit vorgesehen ist.

8. Vorrichtung (10) nach einem der vorhergehenden Ansprüche, **dadurch gekennzeichnet, dass** der Entriegelungsaktuator (42, 43) als pneumatischer Entriegelungsaktuator (42, 43) mit einer Wirkfläche (421) vorgesehen ist, wobei bei in seiner Arretierposition befindlichem Arretiermittel (40) die Wirkfläche (421) beidseitig mit dem Umgebungsdruck verbunden vorgesehen ist.

9. Vorrichtung (10) nach einem der vorhergehenden Ansprüche, **dadurch gekennzeichnet, dass** bei der Aktivierung des Entriegelungsaktuators (42, 43) ein erster Leistungsbedarf zur Lösung des Arretiermittels (40) vorgesehen ist und dass zur Aufrechterhaltung der Lösung des Arretiermittels (40) ein zweiter Leistungsbedarf des Entriegelungsaktuators (42, 43) vorgesehen ist, wobei der zweite Leistungsbedarf kleiner als der erste Leistungsbedarf ist.

10. Vorrichtung (10) nach einem der vorhergehenden Ansprüche, **dadurch gekennzeichnet, dass** der erste Leistungsbedarf des Entriegelungsaktuators (42, 43) mittels einer ersten Ansteuerungsspannung (121) und dass der zweite Leistungsbedarf des Entriegelungsaktuators (42, 43) mittels einer zweiten Ansteuerungsspannung (122) realisiert ist.

11. Vorrichtung (10) nach einem der vorhergehenden Ansprüche, **dadurch gekennzeichnet, dass** der Entriegelungsaktuator mit dem ersten Leistungsbedarf höchstens während eines vorgegebenen Überlastzeitintervalls ansteuerbar vorgesehen ist.

12. Vorrichtung (10) nach einem der vorhergehenden Ansprüche, **dadurch gekennzeichnet, dass** der erste und/oder zweite Leistungsbedarf zeitlich wenigstens teilweise konstant ist oder dass der erste und/oder zweite Leistungsbedarf zeitlich variabel ist.

13. Vorrichtung (10) nach einem der vorhergehenden Ansprüche, **dadurch gekennzeichnet, dass** der erste Leistungsbedarf während eines ersten Ansteuerungsintervalls (112) und dass der zweite Leistungsbedarf während eines zweiten Ansteuerungsintervalls (113) zur Ansteuerung des Entriegelungsaktuators (42, 43) vorgesehen ist.

14. Vorrichtung (10) nach einem der vorhergehenden Ansprüche, **dadurch gekennzeichnet, dass** die Wiederholungsrate einer Aktivierung des Entriegelungsaktuators (42, 43) begrenzt ist oder zumindest während eines vorgegebenen Mittelungsintervalls begrenzt ist.

15. Vorrichtung (10) nach einem der vorhergehenden Ansprüche, **dadurch gekennzeichnet, dass** das Arretiermittel (40) entweder in eine Löseposition und in eine Arretierposition bringbar ist, wobei mittels einer Deaktivierung des Entriegelungsaktuators (42, 43) das Arretiermittel (40) von seiner Löseposition in seine Arretierposition bringbar ist, oder dass das Arretiermittel (40) in eine Löseposition, in eine Arretierposition und in eine Bereitschaftsposition bringbar ist, wobei mittels einer Deaktivierung des Entriegelungsaktuators (42, 43) das Arretiermittel (40) von seiner Löseposition in seine Arretier- oder wenigstens in seine Bereitschaftsposition bringbar ist.

16. Vorrichtung (10) nach einem der vorhergehenden Ansprüche, **dadurch gekennzeichnet, dass** bei einem Spannungsverlust der Vorrichtung (10) oder in einer Notfallsituation eine Deaktivierung des Entriegelungsaktuators (42, 43) vorgesehen ist, wobei eine Notfallsituation insbesondere eine Crash- und/oder Precrash-Situation und/oder eine besonders starke Bremsung des Fahrzeugs ist.

17. Vorrichtung (10) nach einem der vorhergehenden Ansprüche, **dadurch gekennzeichnet, dass** die Vorrichtung (10) ein Signalisierungsmittel umfasst oder der Vorrichtung (10) ein Signalisierungsmittel zugeordnet ist, wobei mittels des Signalisierungsmittels das Vorliegen des Arretiermittels in der Bereitschaftsposition signalisierbar ist.

18. Vorrichtung (10) nach einem der vorhergehenden Ansprüche, **dadurch gekennzeichnet, dass** der Entriegelungsaktuator (42, 43) als pneumatischer Entriegelungsaktuator (42, 43) vorgesehen ist, der mit einer Ventileinheit zusammenwirkt, die bei Überschreiten eines vorgegebenen Beschleunigungswertes in eine vorgegebene Richtung den Entriegeiungsaktuator (42, 43) deaktiviert.

19. Vorrichtung (10) nach einem der vorhergehenden Ansprüche, **dadurch gekennzeichnet, dass** der Entriegelungsaktuator (42, 43) als elektrischer Entriegelungsaktuator (42, 43) vorgesehen ist, der mit einem Sensormittel zusammenwirkt, das bei Überschreiten eines vorgegebenen Beschleunigungswertes in eine vorgegebene Richtung den Entriegelungsaktuator (42, 43) deaktiviert.

20. Vorrichtung (10) nach einem der vorhergehenden Ansprüche, **dadurch gekennzeichnet, dass** die Betätigung des Entriegelungsaktuators (42, 43) und/oder des Verriegelungsaktuators (45) mittels eines ergonomisch sinnvoll positionierten und/oder intuitiv bedienbaren Betätigungselement (2, 3) vorgesehen ist.

21. Vorrichtung (10) nach einem der vorhergehenden Ansprüche, **dadurch gekennzeichnet, dass** als Detektionsmittel zur Detektion des Endes des Einstellzeitintervalls das Betätigungselement (2, 3) vorgesehen ist.

22. Vorrichtung (10) nach einem der vorhergehenden Ansprüche, **dadurch gekennzeichnet, dass** der Vorrichtung (10) ein Sensormittel zugeordnet ist oder dass die Vorrichtung (10) ein Sensormittel umfasst, wobei mittels des Sensormittels ein Sperrsignal bereitstellbar ist, aufgrund dessen eine Aktivierung des Entriegelungsaktuators unterbleibt.

23. Vorrichtung (10) nach Anspruch 22, **dadurch gekennzeichnet, dass** das Sensormittel ein Sitzbelegungssensor oder ein Körperkontaktsensor, insbesondere an einer Rückenlehne oder Armlehne, ist.

24. Verstellmechanismus (20, 30) mit einem ersten Teil (21, 31) und mit einem zweiten Teil (22, 32), wobei bei einer ersten Einstellung des Verstellmechanismus (20, 30) die Teile (21, 22, 31, 32) in einer ersten Position zueinander vorgesehen sind und wobei bei einer zweiten Einstellung des Verstellmechanismus (20, 30) die Teile (21, 22, 31, 32) in einer zweiten Position zueinander vorgesehen sind, wobei der Verstellmechanismus (20, 30) mit einer Vorrichtung (10) nach einem der vorhergehenden Ansprüche zusammenwirkend vorgesehen ist.

25. Verstellmechanismus (20, 30) nach Anspruch 24, **dadurch gekennzeichnet, dass** der Verstellmechanismus (20, 30) durch eine Bewegung der Teile (21, 22, 31, 32), die von einer an den Teilen (21, 22, 31, 32) ansetzenden Kraftwirkung ausgeht, von ihrer ersten Position in ihre zweite Position verstellbar vorgesehen ist.

26. Verstellmechanismus (20, 30) nach Anspruch 24 oder 25, **dadurch gekennzeichnet, dass** die an den Teilen (21, 22, 31, 32) ansetzende Kraftwirkung gegen die Wirkung eines Verstellaktuators, insbesondere eines mechanischen Verstellaktuators, erfolgt.

27. Verstellmechanismus (20, 30) nach Anspruch 26, **dadurch gekennzeichnet, dass** der Verstellaktuator durch eine Bewegung der Teile (21, 22, 31, 32) von ihrer ersten Position in ihre zweite Position gespannt wird, wobei der Verstellaktuator insbesondere als Feder vorgesehen ist.

28. Verstellmechanismus (20, 30) nach Anspruch 26 oder 27, **dadurch gekennzeichnet, dass** die Bewegung des Verstellmechanismus (20, 30) aufgrund des Verstellaktuators geschwindigkeitsbegrenzt ist, wobei insbesondere der Verstellmechanismus ein Dämpfungselement aufweist.

29. Verstellmechanismus (20, 30) nach Anspruch 28, **dadurch gekennzeichnet, dass** der Verstellaktuator und das Dämpfungselement miteinander integriert vorgesehen sind, insbesondere als Gasdruckdämpfer.

30. Verstellmechanismus (20, 30) nach einem der Ansprüche 25 - 29, **dadurch gekennzeichnet, dass** die Relativbewegung der Teile (21, 22, 31, 32) zwischen der ersten Einstellung des Verstellmechanismus (20, 30) und der zweiten Einstellung des Verstellmechanismus (20, 30) eine Translations- oder eine Rotationsbewegung ist.

31. Verstellmechanismus (20, 30) nach einem der Ansprüche 25 - 30, **dadurch gekennzeichnet, dass** der Verstellmechanismus (20, 30) als ein diskontinuierlich oder als ein kontinuierlich verstellbarer Rückenlehnen-Neigungsversteller (20) vorgesehen ist.

32. Verstellmechanismus (20, 30) nach einem der Anspruche 25 - 31, **dadurch gekennzeichnet, dass** der Verstellmechanismus (20, 30) als ein diskontinuierlich oder als ein kontinuierlich verstellbarer Gesamtsitzlängsversteller (30) vorgesehen ist.

33. Verwendung eines Verstellmechanismus (20, 30) nach einem der Ansprüche 24 bis 32 zur Verstellung einer Komponente (1), insbesondere eines Kraftfahrzeugsitzes, eines Kraftfahrzeugs.

## Claims

1. Device (10) for blocking and for releasing an adjusting mechanism (20, 30), the adjusting mechanism (20, 30) having at least two parts (21, 22, 31, 32) which are movable relative to each other, the parts (21, 22, 31, 32) being provided in a first position with respect to each other in a first setting of the adjusting mechanism (20, 30), and the parts (21, 22, 31, 32) being provided in a second position with respect to each other in a second setting of the adjusting mechanism (20, 30), the device (10) having a blocking means (40), it being possible for the blocking means (40) to be brought at least into a blocking position and into a release position relative to the adjusting mechanism (20, 30), an adjustment of the adjusting mechanism (20, 30) from its first setting to its second setting being provided only when the blocking means (40) is in its release position, a change in position of the blocking means (40) from its blocking position into its release position being provided by means of an electric and/or pneumatic unlocking actuator (42, 43), **characterized in that** the unlocking actuator (42, 43) comprises a first partial unlocking actuator and a second partial unlocking actuator, the partial unlocking actuators jointly bringing about the release of the blocking means (40) by means of different mechanical transmission ratios.

2. Device (10) according to Claim 1, **characterized in that** an activation of the unlocking actuator (42, 43) is provided at the beginning of a setting period and a deactivation of the unlocking actuator (42, 43) being provided at the end of the setting period, the device (10) comprising detection means for detecting the end of the setting period or detection means of this type being assigned to the device (10).

3. Device (10) according to one of the preceding claims, **characterized in that** a change in position of the blocking means (40) from its release position into its blocking position is provided by means of a mechanical and/or electric and/or pneumatic locking actuator (45).

4. Device (10) according to one of the preceding claims, **characterized in that** a change in position of the blocking means (40) from its release position into its locking position is provided by means of a spring as mechanical locking actuator (45).

5. Device (10) according to one of the preceding claims, **characterized in that** the change in position of the blocking means (40) from its blocking position into its release position can be carried out counter to an action of force of the locking actuator (45).

6. Device (10) according to one of the preceding claims, **characterized in that** when the blocking means (40) is in its blocking position, a frictional and/or nonpositive action of the blocking means (40) on the adjusting mechanism (20, 30) is provided.

7. Device (10) according to one of the preceding claims, **characterized in that** the supplying of the unlocking actuator (42, 43) and/or of the locking actuator (45) with pneumatic energy is provided either from the intake tract of an internal combustion engine or from a central pressure supply unit or from a decentral pressure supply unit.

8. Device (10) according to one of the preceding claims, **characterized in that** the unlocking actuator (42, 43) as pneumatic unlocking actuator (42, 43) is provided with an active surface (421), the active surface (421) being connected on both sides to the ambient pressure when the blocking means (40) is in its blocking position.

9. Device (10) according to one of the preceding claims, **characterized in that**, when the unlocking actuator (42, 43) is activated, a first power requirement for releasing the blocking means (40) is provided, and **in that**, in order to maintain the releasing of the blocking means (40), a second power requirement of the unlocking actuator (42, 43) is provided, the second power requirement being smaller than the first power requirement.

10. Device (10) according to one of the preceding claims, **characterized in that** the first power requirement of the unlocking actuator (42, 43) is realized by means of a first drive voltage (121), and **in that** the second power requirement of the unlocking actuator (42, 43) is realized by means of a second drive voltage (122).

11. Device (10) according to one of the preceding claims, **characterized in that** the unlocking actuator can be driven with the first power requirement at maximum during a predetermined overload period.

12. Device (10) according to one of the preceding claims, **characterized in that** the first and/or second power requirement is at least partially constant in time, or **in that** the first and/or second power requirement is variable in time.

13. Device (10) according to one of the preceding claims, **characterized in that** the first power requirement is provided during a first drive period (112), and **in that** the second power requirement is provided during a second drive period (113) for driving the unlocking actuator (42, 43).

14. Device (10) according to one of the preceding claims, **characterized in that** the repetition rate of an activation of the unlocking actuator (42, 43) is limited or limited at least during a predetermined averaging period.

15. Device (10) according to one of the preceding claims, **characterized in that** either the blocking means (40) can be brought into a release position and into a blocking position, in which case the blocking means (40) can be brought from its release position into its blocking position by means of a deactivation of the unlocking actuator (42, 43), or **in that** the blocking means (40) can be brought into a release position, into a blocking position and into a standby position, in which case the blocking means (40) can be brought from its release position into its blocking position or into at least its standby position by means of a deactivation of the unlocking actuator (42, 43).

16. Device (10) according to one of the preceding claims, **characterized in that**, when there is a loss of voltage by the device (10) or in an emergency situation, a deactivation of the unlocking actuator (42, 43) is provided, an emergency situation being, in particular, a crash situation and/or precrash situation and/or a particularly severe braking of the vehicle.

17. Device (10) according to one of the preceding claims, **characterized in that**, the device (10) comprises a signaling means or a signaling means is assigned to the device (10), it being possible for the presence of the blocking means in the standby position to be signaled by means of the signaling means.

18. Device (10) according to one of the preceding claims, **characterized in that** the unlocking actuator (42, 43) is provided as pneumatic unlocking actuator (42, 43) which interacts with a valve unit which, when a predetermined acceleration value in a predetermined direction is exceeded, deactivates the unlocking actuator (42, 43).

19. Device (10) according to one of the preceding claims, **characterized in that** the unlocking actuator (42, 43) is provided as electric unlocking actuator (42, 43) which interacts with a sensor means which, when a predetermined acceleration value in a predetermined direction is exceeded, deactivates the unlocking actuator (42, 43).

20. Device (10) according to one of the preceding claims, **characterized in that** the actuation of the unlocking actuator (42, 43) and/or of the locking actuator (45) is provided by means of an ergonomically expediently positioned and/or intuitively operable actuating element (2, 3).

21. Device (10) according to one of the preceding claims, **characterized in that** the actuating element (2, 3) is provided as detection means for detecting the end of the setting period.

22. Device (10) according to one of the preceding claims, **characterized in that** a sensor means is assigned to the device (10), or **in that** the device (10) comprises a sensor means, it being possible for the sensor means to be used to provide an inhibiting signal which prevents an activation of the unlocking actuator.

23. Device (10) according to Claim 22, **characterized in that** the sensor means is a seat occupation sensor or a body contact sensor, in particular on a backrest or armrest.

24. Adjusting mechanism (20, 30) having a first part (21, 31) and having a second part (22, 32), the parts (21, 22, 31, 32) being provided in a first position with respect to one another in a first setting of the adjusting mechanism (20, 30), and the parts (21, 22, 31, 32) being provided in a second position with respect to one another in a second setting of the adjusting mechanism (20, 30), the adjusting mechanism (20, 30) interacting with a device (10) according to one of the preceding claims.

25. Adjusting mechanism (20, 30) according to Claim 24, **characterized in that** the adjusting mechanism (20, 30) can be adjusted from its first position into its second position by a movement of the parts (21, 22, 31, 32) which originates from an action of force applied to the parts (21, 22, 31, 32).

26. Adjusting mechanism (20, 30) according to Claim 24 or 25, **characterized in that** the action of force applied to the parts (21, 22, 31, 32) takes place counter to the action of an adjusting actuator, in particular a mechanical adjusting actuator.

27. Adjusting mechanism (20, 30) according to Claim 26, **characterized in that** the adjusting actuator is tensioned from its first position into its second position by a movement of the parts (21, 22, 31, 32), the adjusting actuator being provided, in particular, as a spring.

28. Adjusting mechanism (20, 30) according to Claim 26 or 27, **characterized in that** the movement of the adjusting mechanism (20, 30) is limited in speed owing to the adjusting actuator, with the adjusting mechanism, in particular, having a damping element.

29. Adjusting mechanism (20, 30) according to Claim 28, **characterized in that** the adjusting actuator and the damping element are integrated with each other, in particular in the form of a gas pressure damper.

30. Adjusting mechanism (20, 30) according to one of Claims 25 to 29, **characterized in that** the relative movement of the parts (21, 22, 31, 32) between the first setting of the adjusting mechanism (20, 30) and the second setting of the adjusting mechanism (20, 30) is a translational or a rotational movement.

31. Adjusting mechanism (20, 30) according to one of Claims 25 to 30, **characterized in that** the adjusting mechanism (20, 30) is provided as a discontinuously or as a continuously adjustable backrest inclination adjuster (20).

32. Adjusting mechanism (20, 30) according to one of Claims 25 to 31, **characterized in that** the adjusting mechanism (20, 30) is provided as a discontinuously or as a continuously adjustable entire seat longitudinal adjuster (30).

33. Use of an adjusting mechanism (20, 30) according to one of Claims 24 to 32 for adjusting a component (1), in particular a motor vehicle seat, of a motor vehicle.

## Revendications

1. Dispositif (10) de blocage et de libération d'un mécanisme d'ajustement (20, 30),
le mécanisme d'ajustement (20, 30) présentant au moins deux parties (21, 22, 31, 32) aptes à être déplacées l'une par rapport à l'autre,
les parties (21, 22, 31, 32) étant prévues en une première position mutuelle dans un premier réglage du mécanisme d'ajustement (20, 30) et les parties (21, 22, 31, 32) étant prévues dans une deuxième position mutuelle dans un deuxième réglage du mécanisme d'ajustement (20, 30),
le dispositif (10) présentant un moyen de blocage (40), le moyen de blocage (40) pouvant être amené en au moins une position de blocage et une position de libération par rapport au mécanisme d'ajustement (20, 30),
un ajustement du mécanisme d'ajustement (20, 30) depuis son premier réglage jusque dans son deuxième réglage n'étant prévu que lorsque le moyen de blocage (40) est situé dans sa position de libération,
une modification de la position du moyen de blocage (40) depuis sa position de blocage jusque dans sa position de libération étant prévue au moyen d'un actionneur de déverrouillage (42, 43) électrique et/ou pneumatique,
**caractérisé en ce que**
l'actionneur de déverrouillage (42, 43) comporte un premier actionneur partiel de déverrouillage et un deuxième actionneur partiel de déverrouillage, les actionneurs partiels de déverrouillage entraînant ensemble la libération du moyen de blocage (40) en utilisant différents taux de conversion mécanique.

2. Dispositif (10) selon la revendication 1, **caractérisé en ce que** l'activation de l'actionneur de déverrouillage (42, 43) est prévue au début d'un intervalle temporel de réglage et la désactivation de l'actionneur de déverrouillage (42, 43) à la fin de l'intervalle temporel de réglage et **en ce que** le dispositif (10) comprend des moyens de détection qui détectent la fin de l'intervalle temporel de réglage ou en ce que de tels moyens de détection sont associés au dispositif (10).

3. Dispositif (10) selon l'une des revendications précédentes, **caractérisé en ce qu'**une modification de la position du moyen de blocage (40) depuis sa position de libération jusque dans sa position de blocage au moyen d'un actionneur (45) de verrouillage mécanique, électrique et/ou pneumatique est prévue.

4. Dispositif (10) selon l'une des revendications précédentes, **caractérisé en ce qu'**une modification de la position du moyen de blocage (40) depuis sa position de libération jusque dans sa position de blocage au moyen d'un ressort qui sert d'actionneur mécanique de verrouillage (45) est prévue.

5. Dispositif (10) selon l'une des revendications précédentes, **caractérisé en ce qu'**une modification de la position du moyen de blocage (40) depuis sa position de blocage jusque dans sa position de libération en opposition à l'action d'une force de l'actionneur de verrouillage (45) est prévue.

6. Dispositif (10) selon l'une des revendications précédentes, **caractérisé en ce que** lorsque le moyen de blocage (40) est situé dans sa position de blocage, une action de frottement et/ou mécanique du moyen de blocage (40) sur le mécanisme d'ajustement (20, 30) est prévue.

7. Dispositif (10) selon l'une des revendications précédentes, **caractérisé en ce que** l'alimentation en énergie pneumatique de l'actionneur de déverrouillage (42, 43) et/ou de l'actionneur de verrouillage (45) est prévue depuis le conduit d'aspiration d'un moteur à combustion interne, depuis une unité centrale d'alimentation en pression ou depuis une unité décentralisée d'alimentation en pression.

8. Dispositif (10) selon l'une des revendications précédentes, **caractérisé en ce que** l'actionneur de déverrouillage (42, 43) est prévu sous la forme d'un actionneur pneumatique de déverrouillage (42, 43) doté d'une surface d'action (421) et **en ce que** lorsque le moyen de blocage (40) est situé dans sa position de blocage, la surface d'action (421) est prévue pour être reliée des deux côtés à la pression ambiante.

9. Dispositif (10) selon l'une des revendications précédentes, **caractérisé en ce que** lorsque l'actionneur de déverrouillage (42, 43) est activé, un premier niveau de puissance est prévu pour libérer le moyen de blocage (40) et **en ce que** pour maintenir la libération du moyen de blocage (40), un deuxième niveau de puissance de l'actionneur de déverrouillage (42, 43) est prévu, le deuxième niveau de puissance étant inférieur au premier niveau de puissance.

10. Dispositif (10) selon l'une des revendications précédentes, **caractérisé en ce que** le premier niveau de puissance de l'actionneur de déverrouillage (42, 43) est obtenu au moyen d'une première tension de commande (121) et **en ce que** le deuxième niveau de puissance de l'actionneur de déverrouillage (42, 43) est obtenu au moyen d'une deuxième tension de commande (122).

11. Dispositif (10) selon l'une des revendications précédentes, **caractérisé en ce que** l'actionneur de déverrouillage est prévu pour être alimenté au premier niveau de puissance au plus pendant un intervalle temporel de surcharge prédéterminé.

12. Dispositif (10) selon l'une des revendications précédentes, **caractérisé en ce que** le premier et/ou le deuxième niveau de puissance sont constants au moins une partie du temps ou **en ce que** le premier et/ou le deuxième niveau de puissance sont variables dans le temps.

13. Dispositif (10) selon l'une des revendications précédentes, **caractérisé en ce que** le premier niveau de puissance est prévu pendant un premier intervalle de commande (112) et **en ce que** le deuxième niveau de puissance est prévu pendant un deuxième intervalle de commande (113) pour l'activation de l'actionneur de déverrouillage (42, 43).

14. Dispositif (10) selon l'une des revendications précédentes, **caractérisé en ce que** le taux de répétition de l'activation de l'actionneur de déverrouillage (42, 43) est limité ou est limité au moins pendant un intervalle prédéterminé de formation d'une valeur moyenne.

15. Dispositif (10) selon l'une des revendications précédentes, **caractérisé en ce que** le moyen de blocage (40) peut être amené dans une position de libération et dans une position de blocage, le moyen de blocage (40) pouvant être amené de sa position de libération jusque dans sa position de blocage au moyen d'une désactivation de l'actionneur de déverrouillage (42, 43), ou **en ce que** le moyen de blocage (40) peut être amené dans une position de libération, une position de blocage et une position d'attente, une désactivation de l'actionneur de déverrouillage (42, 43) permettant d'amener le moyen de blocage (40) depuis sa position de libération jusque dans sa position de blocage ou au moins jusque dans sa position d'attente.

16. Dispositif (10) selon l'une des revendications précédentes, **caractérisé en ce qu'**en cas de chute de tension du dispositif (10) ou en situation d'urgence, une désactivation de l'actionneur de déverrouillage (42, 43) est prévue, une situation d'urgence étant en particulier une situation de collision et/ou de précollision ou un freinage particulièrement puissant du véhicule.

17. Dispositif (10) selon l'une des revendications précédentes, **caractérisé en ce que** le dispositif (10) comprend un moyen de signalisation ou **en ce qu'**un moyen de signalisation est associé au dispositif (10) et **en ce que** la présence du moyen de blocage en position d'attente peut être signalée à l'aide du moyen de signalisation.

18. Dispositif (10) selon l'une des revendications précédentes, **caractérisé en que** l'actionneur de déverrouillage (42, 43) est prévu comme actionneur pneumatique de déverrouillage (42, 43) qui coopère avec une unité de soupape qui, en cas de dépassement d'une valeur prédéterminée d'accélération dans une direction prédéterminée, désactive l'actionneur de déverrouillage (42, 43).

19. Dispositif (10) selon l'une des revendications précédentes, **caractérisé en ce que** l'actionneur de déverrouillage (42, 43) est prévu comme actionneur électrique de déverrouillage (42, 43) qui coopère avec un moyen de détection qui, en cas de dépassement d'une valeur prédéterminée d'accélération dans une direction prédéterminée, désactive l'actionneur de déverrouillage (42, 43).

20. Dispositif (10) selon l'une des revendications précédentes, **caractérisé en ce que** l'actionnement de l'actionneur de déverrouillage (42, 43) et/ou de l'actionneur de verrouillage (45) est prévu au moyen d'un élément d'actionnement (2, 3) positionné de manière ergonomiquement avantageuse et/ou apte à être actionné intuitivement.

21. Dispositif (10) selon l'une des revendications précédentes, **caractérisé en ce que** l'élément d'actionnement (2, 3) est prévu comme moyen de détection qui détecte la fin de l'intervalle temporel de réglage.

22. Dispositif (10) selon l'une des revendications précédentes, **caractérisé en ce qu'**un moyen de détection est associé au dispositif (10) ou **en ce que** le dispositif (10) comprend un moyen de détection, un signal de blocage par lequel l'activation de l'actionneur de déverrouillage est rendue impossible pouvant être délivré à l'aide du moyen de détection.

23. Dispositif (10) selon la revendication 22, **caractérisé en ce que** le moyen de détection est une sonde d'occupation du siège ou une sonde de contact avec le corps, en particulier prévue sur le dossier ou les accoudoirs.

24. Mécanisme d'ajustement (20, 30) qui présente une première partie (21, 31) et une deuxième partie (22, 32), et dans lequel dans un premier réglage du mécanisme d'ajustement (20, 30), les parties (21, 22, 31, 32) sont prévues dans une première position mutuelle et dans un deuxième réglage du mécanisme d'ajustement (20, 30), les parties (21, 22, 31, 32) sont prévues dans une deuxième position mutuelle, le mécanisme d'ajustement (20, 30) étant prévu pour coopérer avec un dispositif (10) selon l'une des revendications précédentes.

25. Mécanisme d'ajustement (20, 30) selon la revendication 24, **caractérisé en ce que** le mécanisme d'ajustement (20, 30) est prévu pour être ajusté par un déplacement des parties (21, 22, 31, 32) qui découle de l'action d'une force appliquée sur les parties (21, 22, 31, 32), de manière à être déplacé de sa première position jusque dans sa deuxième position.

26. Mécanisme d'ajustement (20, 30) selon les revendications 24 ou 25, **caractérisé en ce que** l'action de la force appliquée sur les parties (21, 22, 31, 32) est en opposition à l'action d'un actionneur d'ajustement et en particulier d'un actionneur mécanique d'ajustement.

27. Mécanisme d'ajustement (20, 30) selon la revendication 26, **caractérisé en ce que** l'actionneur d'ajustement est contraint de sa première position à sa deuxième position par un déplacement des parties (21, 22, 31, 32), l'actionneur d'ajustement étant en particulier prévu sous la forme d'un ressort.

28. Mécanisme d'ajustement (20, 30) selon les revendications 26 ou 27, **caractérisé en ce que** la vitesse du déplacement du mécanisme d'ajustement (20, 30) est limitée par l'actionneur d'ajustement, le mécanisme d'ajustement présentant en particulier un élément d'amortissement.

29. Mécanisme d'ajustement (20, 30) selon la revendication 28, **caractérisé en ce que** l'actionneur d'ajustement et l'élément d'amortissement sont intégrés l'un à l'autre, en particulier comme amortisseur à gaz sous pression.

30. Mécanisme d'ajustement (20, 30) selon l'une des revendications 25 à 29, **caractérisé en ce que** le déplacement relatif des parties (21, 22, 31, 32) entre le premier réglage du mécanisme d'ajustement (20, 30) et le deuxième réglage du mécanisme d'ajustement (20, 30) est un déplacement de translation ou un déplacement de rotation.

31. Mécanisme d'ajustement (20, 30) selon l'une des revendications 25 à 30, **caractérisé en ce que** le mécanisme d'ajustement (20, 30) est prévu comme système (20) d'ajustement de l'inclinaison du dossier ajustable de manière discontinue ou continue.

32. Mécanisme d'ajustement (20, 30) selon l'une des revendications 25 à 31, **caractérisé en ce que** le mécanisme d'ajustement (20, 30) est prévu comme système (30) d'ajustement de la longueur totale du siège ajusté de manière discontinue ou continue.

33. Utilisation d'un mécanisme d'ajustement (20, 30) selon l'une des revendications 24 à 32 pour ajuster un composant (1) et en particulier un siège de véhicule automobile.
